# DEMANDE DE BREVET EUROPEEN

(11) **EP 4 574 285 A1**
(43) Date de publication de la demande: **25.06.2025**
(21) Numéro de dépôt: 24221916.0
(22) Date de dépôt: 19.12.2024
(51) Int. Cl.: B09B 3/35, A62D 3/36, B09B 3/40, B09B 3/70, B02C 23/36, B02C 17/20, B02C 23/18, B02C 17/00, B02C 17/04, B02C 17/10, B02C 17/18, B09B 101/35, A62D 101/41

(54) **PROCÉDÉ DE TRAITEMENT D'UN DÉCHET AMIANTÉ UTILISANT UN BROYEUR HORIZONTAL ROTATIF**

(30) Priorité: 20.12.2023 FR 2314544
(71) Demandeur: Valame, 59320 Hallennes Lez-Haubourdin (FR)
(72) Inventeur: LEPERS, Pierre-Emmanuel, 59110 LA MADELEINE (FR); PLESSIS, Marine, 59160 LOMME (FR); DELMAS, Michel, 31320 AUZEVILLE-TOLOSANE (FR)
(74) Mandataire: Renard, Emmanuelle

(57) **Abrégé**

La présente invention concerne un procédé de traitement d'une matière solide contenant de l'amiante, comprenant la mise en contact de la matière solide avec une solution aqueuse d'acide dans un broyeur horizontal rotatif, pour décomposer la charge minérale comprise dans la matière solide amiantée, puis une étape de chauffage en vue de décomposer l'amiante. L'invention a également pour objet l'utilisation d'un broyeur horizontal rotatif pour décomposer, à l'aide d'une solution d'acide, une matière solide contenant : (a) de l'amiante et (b) un liant minéral.

## Description

### OBJET DE L'INVENTION

La présente invention concerne un procédé de traitement d'une matière solide contenant de l'amiante, comprenant la mise en contact de la matière solide avec une solution aqueuse d'acide dans un broyeur horizontal rotatif, pour décomposer la charge minérale comprise dans la matière solide amiantée, puis une étape de chauffage en vue de décomposer l'amiante. L'invention a également pour objet l'utilisation d'un broyeur horizontal rotatif pour décomposer, à l'aide d'une solution d'acide, une matière solide contenant : (a) de l'amiante et (b) un liant minéral.

### ARRIERE-PLAN DE L'INVENTION

L'amiante est un matériau formé de fibres de silicate essentiellement de chrysotile, un silicate de magnésium de formule Mg₃[Si₂O₅(OH)₄], qui a été massivement utilisé dans les années 70 à la fois comme renfort dans des composites et comme isolant dans le domaine de la construction. Son implication dans des cancers des voies respiratoires a entraîné son interdiction dans un certain nombre de pays et la mise en place de mesures spécifiques sur les chantiers de rénovation de bâtiments afin de protéger les personnels et d'assurer le traitement des déchets amiantés. Actuellement, la quasi-totalité des déchets issus des opérations de désamiantage sont enfouis.

Des recherches ont donc été menées afin de disposer d'un procédé de traitement des déchets amiantés (ou MPCA, pour Matériaux et Produits Contenant de l'Amiante) qui soit plus respectueux de l'environnement, en permettant leur traitement et en aboutissant à des résidus non-dangereux éventuellement valorisables.

Dans ce contexte, il a déjà été proposé de traiter des déchets amiantés, notamment à base de fibrociment, à l'aide d'acide chlorhydrique afin de les décomposer et d'isoler notamment des sels de cations métalliques et de la silice (EP 2 285 455). Pour ce faire, les déchets amiantés sont broyés avant d'être traités à l'aide d'acide chlorhydrique à température ambiante afin de séparer l'amiante et les solides siliciques éventuellement présents (issus de l'argile constitutive du liant hydraulique) des constituants non amiantés et non siliciques, puis le solide amianté obtenu est séparé par filtration avant d'être remis en suspension, dans un réacteur de type malaxeur, dans une solution aqueuse d'acide chlorhydrique portée à reflux (à 70-1 10°C, typiquement 95°C) pendant plusieurs heures.

La demande de brevet EP 4 124 397 décrit un perfectionnement de ce procédé, permettant de traiter des types de MPCA très différents, dans lequel l'étape de chauffage du solide amianté en présence d'acide chlorhydrique est réalisée suivant une rampe de température comprenant un premier palier à 50-60°C et un second palier à 70-100°C.

Dans les procédés ci-dessus, le broyage préalable des déchets amiantés est effectué à sec, dans un broyeur à marteaux, ou en variante dans un moulin humide afin de limiter la formation de poussières, jusqu'à obtenir des granulats de 1 à 10 mm, plus particulièrement de 100 µm à 2 mm, par exemple de 500 µm à 1,8 mm, qui sont ensuite soumis à la première étape d'attaque acide à froid puis à la ou aux attaque(s) acide(s) à chaud.

Le document WO2021/254626 divulgue également un procédé de traitement de déchets amiantés comprenant une première attaque acide à froid (15-50°C) suivie d'une attaque acide à chaud (70-90°C). Là encore, la matière amiantée de départ est soumise à un broyage fin permettant d'abaisser sa taille de particule à moins de 1 mm avant contact avec l'acide.

Or, il est apparu aux inventeurs que ces méthodes de broyage n'étaient pas satisfaisantes. En effet, lors du traitement de dalles de sol amiantées, il a été observé des phénomènes de bourrage du broyeur à marteaux lorsque la durée du broyage est insuffisante. La cadence d'insertion dans le broyeur doit donc être ralentie. En outre, bien que le procédé perfectionné décrit précédemment permette de limiter la formation de mousse, cette dernière constitue néanmoins un problème dans le cas de certains déchets riches en carbonates, tels que les dalles de sol (qui comprennent par exemple une combinaison de charge minérale carbonatée, de PVC et d'amiante) ou les déchets à base de fibrociment. Il est en effet apparu que la mise en contact d'un tel solide amianté, ayant une surface spécifique élevée après broyage, avec de l'acide chlorhydrique en quantité nécessaire et suffisante à la réaction, favorisait la formation de mousse. Pour contrer ce phénomène, un agent anti-mousse est ajouté dans le réacteur avant introduction de la matière solide amiantée et celle-ci est introduite progressivement, de façon à ce que la mousse puisse être abattue avant de pouvoir poursuivre l'ajout du solide amianté au milieu réactionnel. A défaut, la mousse forme une barrière entre la solution acide et la matière solide qu'il est ainsi difficile de mettre en suspension. Dans des cas extrêmes, la mousse peut endommager le réacteur et son instrumentation. Dans tous les cas, lors de cette étape de mise en contact, il est nécessaire de prévoir une quantité importante d'eau et une forte agitation dans le réacteur afin de mettre en suspension le solide amianté broyé. Ces désagréments affectent l'efficacité et l'économie du procédé.

Il serait donc utile de disposer d'un procédé remédiant aux inconvénients précités et permettant ainsi d'améliorer encore son impact environnemental et son bilan énergétique, en vue de son exploitation à l'échelle industrielle.

### RESUME DE L'INVENTION

L'invention a ainsi pour objet un procédé de traitement d'une matière solide contenant de l'amiante, caractérisé en ce qu'il comprend les étapes successives suivantes :
(a) la fragmentation de la matière solide pour former des fragments dont la plus grande dimension est comprise entre 1 et 20 cm,
(b) la mise en contact de la matière solide fragmentée avec une solution aqueuse d'acide, à une température comprise entre 5°C et moins de 50°C, dans un broyeur horizontal rotatif, de manière à obtenir une suspension,
(c) éventuellement, la séparation de la suspension issue de l'étape (b) en un filtrat et une matière solide traitée, suivie de la mise en suspension de la matière solide traitée dans un bain d'acide,
(d1) éventuellement, le chauffage de la suspension issue de l'étape (b) ou (c), à une température comprise entre 50°C et 70 °C,
(d2) le chauffage de la suspension issue de l'étape (b), (c) ou (d1) à une température comprise entre 80 et 110°C, de préférence entre 90 et 95°C, et
(e) le refroidissement de la suspension obtenue à l'étape (d2).

Le procédé ci-dessus présente de nombreux avantages vis-à-vis des procédés de l'art antérieur :
- la cinétique de réaction du traitement acide à froid est plus stable et constante,
- la génération de mousse due à la mise en contact du solide amianté avec l'acide est modérée et mieux maîtrisée, car : (a) l'interface solide/liquide est renouvelée en continu du fait de la combinaison simultanée de l'attrition par le broyeur et de l'attaque par l'acide, et (b) bien que la réaction soit exothermique, la montée en température du milieu réactionnel se fait graduellement et se contrôle plus facilement,
- le volume du milieu réactionnel lors de cette attaque acide est réduit puisqu'il n'est plus nécessaire de le diluer fortement pour éviter la sédimentation des MPCA,
- des morceaux de déchets de l'ordre de quelques centimètres peuvent être directement traités, voire des pièces entières comme des carreaux de carrelage ou de faïence, de sorte qu'un broyage fin n'est plus nécessaire, ce qui réduit les coûts d'investissement et
d'exploitation du procédé et les émissions de poussières (particulièrement en comparaison avec les procédés de broyage à sec).

Ce procédé permet en outre de réaliser une économie d'énergie d'environ 50% par rapport aux procédés de l'art antérieur décrits ci-dessus.

L'invention a également pour objet l'utilisation d'un broyeur horizontal rotatif pour décomposer, à l'aide d'une solution d'acide, une matière solide contenant : (a) de l'amiante et (b) un liant minéral.

### BREVE DESCRIPTION DES FIGURES

La Figure 1 est un schéma illustrant les différentes étapes d'un mode de réalisation du procédé selon l'invention, comprenant une étape de chauffe incluant deux paliers de température à au moins 50°C et à au moins 80°C, respectivement, et une étape de séparation du calcium.
La Figure 2 est un schéma illustrant les différentes étapes d'un mode de réalisation du procédé selon l'invention, comprenant une étape de chauffe incluant deux paliers de température à au moins 50°C et à au moins 80°C, respectivement, sans séparation du calcium.
La Figure 3 est un schéma illustrant les différentes étapes d'un mode de réalisation du procédé selon l'invention, comprenant une étape unique de chauffe à au moins 80°C et une étape de séparation du calcium.
La Figure 4 est un schéma illustrant les différentes étapes d'un mode de réalisation du procédé selon l'invention, comprenant une étape unique de chauffe à au moins 80°C, sans séparation du calcium.

### DESCRIPTION DETAILLEE

Le procédé selon l'invention vise à traiter de manière simple et économique, à l'échelle industrielle, une matière solide contenant de l'amiante. Par « matière solide contenant de l'amiante », on entend toute matière solide constituée par des, ou issue de, déchets amiantés renfermant de l'amiante et un liant minéral, ainsi qu'éventuellement au moins un liant organique. Le liant minéral renferme en général au moins un composé choisi parmi : un carbonate, notamment du carbonate de calcium ; un sel, oxyde et/ou hydroxyde de calcium, en particulier du calcaire et/ou du gypse ; des oxydes et/ou hydroxydes de fer, d'aluminium et/ou de magnésium; de la silice ; de l'alumine ; un aluminosilicate ; et leurs mélanges, de préférence le liant minéral comprend au moins un carbonate, éventuellement en mélange avec un ou plusieurs des composés précités. Le liant organique comprend de son côté une résine organique (notamment de PVC), éventuellement sous forme de composite. L'amiante est de préférence de la chrysotile.

Ces déchets amiantés peuvent ainsi être choisis notamment parmi : des flocages d'amiante ; des colles et enduits amiantés ; des plaques ou dalles de couverture de sol (notamment en carrelage ou faïence), de murs ou de toit (en particulier des tôles de fibrociment) ; du plâtre amianté ; ou des tuyauteries, notamment à base de fibrociment, en particulier des conduites d'aération ou des conduites d'adduction ou d'évacuation d'eau ; ainsi que des éléments de mobilier à base de plaques d'amiante-ciment recouvertes d'émail (Glasal). Dans ces produits, l'amiante peut être associé à du ciment, du plâtre, du carton, de la peinture ou des résines.

L'un des principaux avantages du procédé selon l'invention est sa capacité à s'adapter au traitement de ces différents types de déchets, quelle que soit leur composition chimique. D'une manière générale, les déchets amiantés traités selon l'invention renferment de 5 à 20% en poids et plus généralement de 5 à 15% en poids d'amiante. Dans des cas particuliers (flocages notamment), ils peuvent renfermer jusqu'à 80 % en poids d'amiante.

Les différentes étapes du procédé de traitement de ces déchets amiantés seront à présent décrites plus en détail.

Dans un premier temps, la matière solide amiantée est soumise à une étape (a) de fragmentation. Il peut s'agit typiquement d'un concassage ou broyage grossier à l'aide d'un broyeur à cisailles ou à percussion ou (dans le cas d'une matière solide fibreuse) d'une déchiqueteuse. Cette étape consiste à réduire la taille du solide amianté de telle manière que sa plus grande dimension soit comprise entre 1 et 20 cm, par exemple entre 2 et 15 cm, voire entre 2 et 5 cm. Il est possible de prévoir un enchaînement de concasseurs afin d'atteindre la taille souhaitée, bien que cela ne soit pas souhaitable.

Pendant ou après l'étape (a), il est possible de séparer les métaux présents dans la matière solide fragmentée. Pour ce faire, différentes techniques peuvent être envisagées, qui sont bien connues de l'homme du métier. Suivant qu'il s'agit de métaux ferreux ou non ferreux, on peut ainsi envisager l'utilisation d'aimants overband (aimants électromagnétiques à champ profond), d'un tambour magnétique ou d'une séparation par courant de Foucault, par exemple. Cette étape de séparation des métaux permet d'éviter qu'ils endommagent certains concasseurs, mais aussi d'éviter de générer du dihydrogène lors du contact ultérieur de la matière solide avec de l'acide et de créer ainsi des zones à risque d'explosion.

La matière solide fragmentée est ensuite mise en contact dans l'étape (b) avec une solution aqueuse d'acide, dans un broyeur horizontal rotatif, à une température comprise entre 5°C et moins de 50°C, de manière à obtenir une suspension. La réaction étant plus ou moins exothermique, il est possible qu'après mise en contact de la matière solide avec l'acide, de préférence à une température comprise entre 20 et 30°C, la température du milieu s'approche de 50°C. Dans le cas contraire, il peut être utile de chauffer légèrement le milieu.

Par « broyeur horizontal rotatif », on entend dans cette description un dispositif comprenant une chambre de broyage disposée horizontalement par rapport au sol et mise en rotation par un moteur, par exemple au moyen de rouleaux formant berceau pour la chambre de broyage. La chambre comprend en outre une ou plusieurs barres ou des boulets (servant de media de broyage) et sa surface interne peut être éventuellement pourvue de protubérances servant de déflecteurs. Généralement, ce type de broyeur comprend une ouverture ménagée dans l'une de ses parois latérales, destinée à l'introduction de la matière solide fragmentée et de la solution d'acide. Cette paroi comprend de préférence un évent. La paroi latérale opposée est dans ce cas destinée à la vidange du contenu du broyeur, c'est-à-dire de la suspension issue de l'étape (b). Le matériau constituant les parois internes du broyeur est choisi de manière à être résistant à l'abrasion et à l'acide utilisé. Si nécessaire, le broyeur peut en outre être équipé de capteurs de pH, de température et/ou de conductivité. Dans le procédé selon l'invention, le broyeur horizontal peut être mis en rotation à une vitesse relativement faible par comparaison avec les broyeurs de l'art antérieur, sans pour autant qu'il ne se produise une sédimentation de la matière solide amiantée, aussi dense soit-elle. La durée de mise en contact dans le broyeur horizontal de la solution d'acide avec la matière solide fragmentée peut varier en fonction, notamment, du diamètre du broyeur et est généralement comprise entre 30 minutes et 6h.

On préfère que la solution d'acide utilisée dans l'étape (b) soit constituée d'acide chlorhydrique, bien qu'il puisse en variante être possible d'utiliser de l'acide sulfurique, voire des acides organiques. Dans ce cas, elle renferme avantageusement au moins 15% en poids, de préférence au moins 18% en poids, plus préférentiellement de 20 à 30% en poids d'acide chlorhydrique. La quantité de solution d'acide est dans tous les cas ajustée pour obtenir une suspension renfermant par exemple de 20 à 50% en poids, de préférence de 30 à 45% en poids, de matière solide.

Il a été observé que la combinaison de l'attrition mécanique produite par le broyeur horizontal avec la lixiviation/fragilisation de la matière solide par l'acide permet de déliter totalement la matière solide, bien qu'elle ne soit que grossièrement broyée avant l'étape (b). En outre, le dégagement de dioxyde de carbone dans cette étape est relativement constant et ne nécessite pas l'ajout d'un agent anti-mousse. En effet, un équilibre s'établit naturellement entre la production de mousse et son abattement au cours de cette étape du procédé, ce qui permet de la maîtriser. On procède ainsi à une attaque acide des constituants non siliciques du liant présent dans le déchet amianté. Cette étape de traitement à froid permet précisément de décomposer le déchet amianté en un solide amianté, de la silice (issue des liants hydrauliques éventuellement inclus dans le déchet amianté) et des chlorures métalliques. Les carbonates éventuellement présents dans le déchet amianté sont majoritairement décomposés à ce stade, selon les réactions suivantes :

CaCO₃ + 2HCl -> CaCl₂ + CO₂ + H₂O

CaO + 2HCl -> CaCl₂ + H₂O

Lors de l'étape (c), la suspension issue de l'étape (b) est ensuite éventuellement séparée, généralement par filtration, en un filtrat et une matière solide traitée, avant que la matière solide traitée ne soit remise en suspension dans un bain d'acide, éventuellement après lavage à l'eau. Cette matière solide présente avantageusement une taille de particules telle qu'au moins 85% en volume des particules (Dv90), de préférence au moins 90% en volume des particules, voire au moins 95% en volume des particules, présente un diamètre inférieur à 1 mm, tel que mesuré par granulométrie laser à pas variable.

Le filtrat issu de l'étape (c) peut être éventuellement traité de manière à isoler les sels de cations métalliques qu'il contient, comme décrit dans la demande EP 2 285 455. A cette fin, on ajuste en général son pH à une valeur allant de 5 à 7, avantageusement au moyen d'oxyde ou d'hydroxyde de calcium, de manière à neutraliser l'acide résiduel et à séparer les sels de fer et d'aluminium (qui précipitent sous forme d'hydroxydes) des sels de calcium (qui restent en solution). Après filtration du milieu, ces sels de cations métalliques peuvent eux-mêmes être valorisés.

Dans une première forme d'exécution, la suspension issue de l'étape (b) ou (c) est soumise à un traitement acide à chaud par paliers, suivant deux étapes (d1) et (d2).

A cette fin, la suspension est d'abord portée à une première température T1 comprise entre 50°C et 70 °C, de préférence entre 50 et 55°C, et peut être maintenue à cette température pendant une durée allant de 20 minutes à 1 heure. Cette étape permet d'avancer significativement la décomposition des matières carbonatées en dioxyde de carbone. On veillera dans cette étape à ne pas atteindre ou dépasser la température d'ébullition de la solution d'acide. Pour ce faire, la concentration en acide est mesurée pendant l'étape (d1) et une solution aqueuse d'acide est éventuellement ajoutée à la suspension, en quantité telle que la concentration en acide ne dépasse généralement pas 400 g/l, dans le cas de l'acide chlorhydrique.

Dans cette forme d'exécution, le procédé selon l'invention peut comprendre une étape supplémentaire de récupération du dioxyde de carbone généré dans l'étape (b) et/ou dans l'étape (d1).

La suspension issue de l'étape (d1) est alors soumise à une étape de chauffe de finition (d2). Pour ce faire, elle peut soit être directement soumise à l'étape (d2), soit être d'abord filtrée, puis le solide obtenu peut être remis en suspension dans l'acide en vue de l'étape (d2). Dans tous les cas, l'étape (d2) consiste à porter la suspension à une seconde température T2 comprise entre 80 et 110°C, de préférence de 90 à 95°C, et à la maintenir à cette température pendant une durée allant généralement de 30 minutes à 1 heure. Cette étape de finition permet de convertir (ou finir de convertir) l'amiante en silice et de dissoudre les composés non siliciques de l'amiante sous forme de chlorures de fer et de magnésium, notamment. Elle peut être effectuée à une température allant jusqu'au point d'ébullition de la solution d'acide. Pour ce faire, la concentration en acide est mesurée pendant l'étape (d2) et une solution aqueuse d'acide est éventuellement ajoutée à la suspension. Dans le cas où on utilise de l'acide chlorhydrique, la quantité de solution d'acide ajoutée est de préférence telle que la concentration en acide chlorhydrique ne dépasse pas 340 g/l, de préférence 250 g/L. En pratique, dans le cas où on utilise une solution d'acide chlorhydrique ayant une concentration supérieure à 20% massique, il est possible de chauffer la suspension à 70°C jusqu'à ce que l'acide chlorhydrique soit consommé au point de représenter 20% massique de la suspension, puis de procéder à un chauffage à 95°C ou 100°C (les vapeurs étant dans ce cas essentiellement composées d'eau).

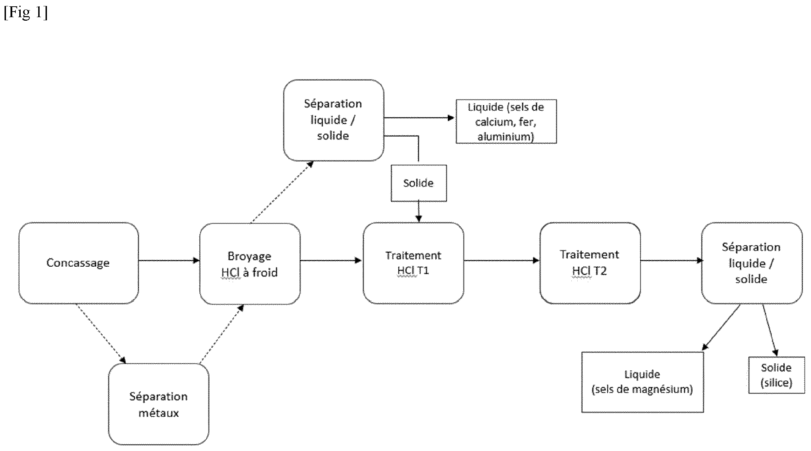

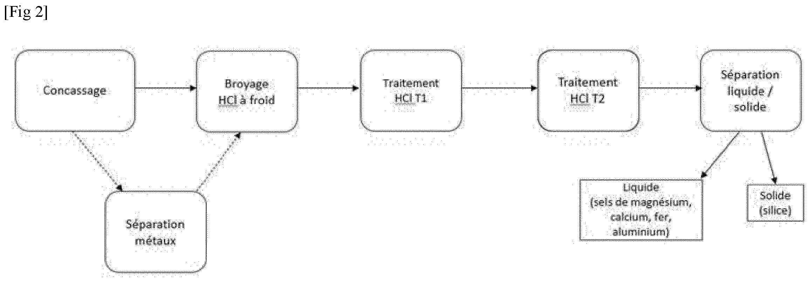

Cette forme d'exécution est illustrée sur les Figures 1 et 2, en utilisant l'acide chlorhydrique comme réactif, bien que l'invention ne soit pas limitée à ce mode de réalisation. Elle présente plusieurs avantages :
- la température du palier de chauffe est atteinte plus rapidement,
- l'énergie à déployer pour atteindre cette température est moins importante,
- à 50°C le CO₂ entraîne moins d'acide lors de son dégagement, de sorte que la grande majorité de l'acide reste en phase liquide pour la réaction de décomposition de l'amiante qui sera effectuée ensuite.

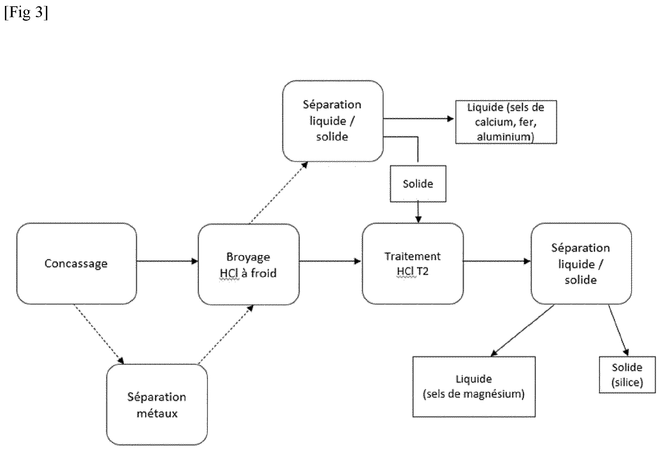

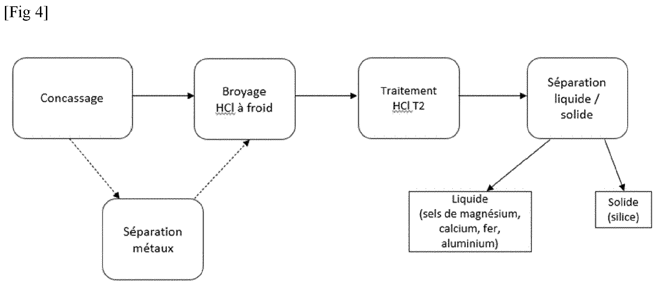

Une seconde forme d'exécution de l'invention est illustrée sur les Figures 3 et 4, en utilisant l'acide chlorhydrique comme réactif, bien que l'invention ne soit pas limitée à ce mode de réalisation. Dans cette forme d'exécution, l'étape (d2) est mise en oeuvre directement à l'issue de l'étape (c), c'est-à-dire que la suspension issue de l'étape (c) est chauffée à une température T2 comprise entre 80 et 110°C, de préférence entre 90 et 95°C, pendant une durée allant par exemple de 30 minutes à 1 heure. On utilise avantageusement une solution d'acide chlorhydrique à 12-25% en poids, de préférence à 15-20% en poids.

On notera que, dans le cas où l'étape (c) n'est pas mise en oeuvre, les étapes (d1) et/ou (d2) peuvent éventuellement être mises en oeuvre dans le même broyeur horizontal que celui utilisé dans l'étape (b) lorsque les matériaux qui le constituent sont adaptés à supporter ces conditions réactionnelles.

L'acide non consommé dans l'étape (d2) peut être recyclé vers l'étape (b) ou (d1).

A l'issue de l'étape (d2), la suspension obtenue est refroidie, par exemple à une température comprise entre 25 et 80°C, préférentiellement de 25 à 60°C, lors de l'étape (e).

On peut ensuite procéder à une filtration de la suspension refroidie, lors d'une étape (f), de manière à obtenir un filtrat renfermant des chlorures métalliques et une fraction solide contenant notamment de la silice, généralement de haute surface spécifique (entre 150 et 300 m²/g) et qui est donc valorisable. La fraction solide peut en outre renfermer des matières plastiques, telles que du PVC, en particulier lorsque le déchet amianté est une dalle de sol en vinyle-amiante.

Le filtrat issu de l'étape (f) peut être éventuellement traité de manière à isoler les sels de cations métalliques qu'il contient, comme décrit dans la demande EP 2 285 455. A cette fin, on ajuste en général son pH à une valeur allant de 5 à 7, avantageusement au moyen d'oxyde ou d'hydroxyde de magnésium ou de calcium, de préférence d'oxyde ou d'hydroxyde de magnésium, de manière à neutraliser l'acide résiduel et à séparer les sels de fer et d'aluminium éventuellement présents (qui précipitent sous forme d'hydroxydes) des sels de magnésium et éventuellement de calcium (qui restent en solution).

Précisément, dans le cas où l'étape (c) a été mise en oeuvre, on récupère dans l'étape (f) la silice et les sels de magnésium, comme illustré sur les Figures 1 et 3. A défaut, on récupère dans l'étape (f) non seulement la silice, mais également les sels de calcium, de magnésium, de fer et d'aluminium, comme illustré sur les Figures 2 et 4.

Après filtration du milieu, ces sels de cations métalliques peuvent eux-mêmes être valorisés, par exemple en tant que tels ou au moyen de l'électrolyse pour ce qui est des sels de magnésium, et dans le domaine du traitement de l'eau, pour ce qui concerne les sels de fer.

### EXEMPLES

L'invention sera mieux comprise à la lumière des exemples suivants, qui sont donnés à titre purement illustratif et n'ont pas pour but de limiter la portée de l'invention, définie par les revendications annexées.

### Exemple 1 : Procédé de traitement d'amiante utilisant un réacteur horizontal rotatif

Ce procédé est illustré schématiquement à la Figure 1.

On a concassé sommairement 500g d'amiante ciment en morceaux de 3 ou 4 cm qui ont ensuite été introduits dans un réacteur horizontal rotatif contenant une barre en PVC servant de media broyant et 1250 ml d'acide chlorhydrique à 23%. Le broyeur disposé en berceau sur des rouleaux reliés à un moteur électrique a été mis en rotation en actionnant ce moteur. Des déflecteurs disposés à l'intérieur du broyeur permettaient de relever la barre en PVC et de la faire rouler sur la charge lors de la rotation du broyeur. La hauteur de mousse observée ne dépassait pas 10% du milieu réactionnel, de sorte qu'il n'a pas été nécessaire d'ajouter un agent anti-mousse.

Au bout de 4h, la suspension obtenue a été transférée dans un réacteur chauffé muni d'une agitation mécanique, dans lequel la suspension a été portée à une température proche de l'ébullition de la solution pendant une heure. Le mélange a ensuite été filtré pour retirer la silice du reste de la solution aqueuse. La silice a alors été lavée et séchée, tandis que le filtrat a été traité pour extraire les sels qu'il contenait. Pour ce faire, on a introduit 40g d'hydroxyde de calcium (sous forme de suspension aqueuse à 30%) dans le milieu, pour ramener le pH vers 7 et convertir les chlorures de fer et d'aluminium en hydroxydes de fer et d'aluminium sous forme de précipité. Le mélange a ensuite été filtré pour retirer les hydroxydes de la solution saline constituée majoritairement de chlorure de calcium issu de la décomposition du liant hydraulique et du chlorure de magnésium provenant de la déstructuration du chrysotile.

### Exemple 2 : Procédé de traitement d'amiante avec récupération du calcium

Ce procédé est illustré schématiquement à la Figure 1.

On a concassé sommairement 500g d'amiante ciment en morceaux de 3 ou 4 cm qui ont ensuite été introduits dans un réacteur horizontal rotatif contenant une barre en PVC servant de media broyant et 1250 ml d'acide chlorhydrique à 23%. Le broyeur disposé en berceau sur des rouleaux reliés à un moteur électrique a été mis en rotation en actionnant ce moteur. Des déflecteurs disposés à l'intérieur du broyeur permettaient de relever la barre en PVC et de la faire rouler sur la charge lors de la rotation du broyeur. La hauteur de mousse observée ne dépassait pas 10% du milieu réactionnel, de sorte qu'il n'a pas été nécessaire d'ajouter un agent anti-mousse.

Après 4h , la suspension obtenue a été filtrée.

Le filtrat a été neutralisé par ajout de lait de chaux à 30% massique, entraînant une précipitation du fer et de l'aluminium sous forme d'hydroxydes qui ont été lavés et séchés. Après neutralisation, l'eau du filtrat a été évaporée et le solide a été analysé : il comprenait 370g de CaCl₂ (exprimés en sel anhydre) qui était pur à 98.

De son côté, le solide issu du broyeur a été rincé à l'eau avant d'être transféré dans un réacteur chauffé muni d'une agitation mécanique, dans lequel le solide a été mis en suspension dans une solution d'acide chlorhydrique contenant 30 g de HCl dans 250 mL d'eau. La suspension a été portée à une température proche de l'ébullition de la solution (95°C) pendant une heure. Le mélange a ensuite été filtré pour séparer la silice du reste de la solution aqueuse. La silice a alors été lavée et séchée, tandis que le filtrat a été ramené à un pH proche de 7. Pour ce faire, on a introduit 4,5 g d'hydroxyde de magnésium (sous forme de suspension aqueuse à 30%) dans le milieu, puis l'eau a été évaporée et le solide obtenu a été analysé : il renfermait 30g de MgCl₂ (exprimés en sel anhydre) pur à plus de 95%.

## Revendications

1. Procédé de traitement d'une matière solide contenant de l'amiante, **caractérisé en ce qu'**il comprend les étapes successives suivantes :
(a) la fragmentation de la matière solide pour former des fragments dont la plus grande dimension est comprise entre 1 et 20 cm,
(b) la mise en contact de la matière solide fragmentée avec une solution aqueuse d'acide, à une température comprise entre 5°C et moins de 50°C, dans un broyeur horizontal rotatif, de manière à obtenir une suspension,
(c) éventuellement, la séparation de la suspension issue de l'étape (b) en un filtrat et une matière solide traitée, suivie de la mise en suspension de la matière solide traitée dans un bain d'acide,
(d1) éventuellement, le chauffage de la suspension issue de l'étape (b) ou (c), à une température comprise entre 50°C et 70 °C,
(d2) le chauffage de la suspension issue de l'étape (b), (c) ou (d1) à une température comprise entre 80 et 110°C, de préférence entre 90 et 95°C, et
(e) le refroidissement de la suspension obtenue à l'étape (d2).

2. Procédé selon la revendication 1, **caractérisé en ce qu'**il comprend en outre, pendant ou après l'étape (a), une étape de séparation des métaux présents dans la matière solide fragmentée.

3. Procédé selon la revendication 1 ou 2, **caractérisé en ce que** le filtrat issu de l'étape (c) est traité de manière à isoler les sels de cations métalliques qu'il contient, par ajustement de son pH à une valeur allant de 5 à 7, avantageusement au moyen d'oxyde ou d'hydroxyde de calcium, de manière à neutraliser l'acide résiduel et à séparer les sels de fer et d'aluminium des sels de calcium.

4. Procédé selon l'une quelconque des revendications 1 à 3, **caractérisé en ce qu'**il comprend une étape supplémentaire de récupération du dioxyde de carbone généré dans l'étape (b) et/ou dans l'étape (d1).

5. Procédé selon l'une quelconque des revendications 1 à 4, **caractérisé en ce que** l'acide non consommé dans l'étape (d2) est recyclé vers l'étape (b) ou (d1).

6. Procédé selon l'une quelconque des revendications 1 à 5, **caractérisé en ce qu'**il comprend en outre une étape de filtration de la suspension refroidie issue de l'étape (e), lors d'une étape (f), de manière à obtenir un filtrat renfermant des chlorures métalliques et une fraction solide contenant notamment de la silice.

7. Procédé selon la revendication 6, **caractérisé en ce que** le filtrat issu de l'étape (f) est traité de manière à isoler les sels de cations métalliques qu'il contient, par ajustement de son pH à une valeur allant de 5 à 7, avantageusement au moyen d'oxyde ou d'hydroxyde de magnésium, de manière à neutraliser l'acide résiduel et à séparer les sels de fer et d'aluminium éventuellement présents des sels de magnésium et éventuellement de calcium.

8. Procédé selon l'une quelconque des revendications 1 à 7, **caractérisé en ce que** la matière solide contenant de l'amiante comprend un liant minéral renfermant au moins un composé choisi parmi : un carbonate, notamment du carbonate de calcium ; un sel, oxyde et/ou hydroxyde de calcium, en particulier du calcaire et/ou du gypse ; des oxydes et/ou hydroxydes de fer, d'aluminium et/ou de magnésium; de la silice ; de l'alumine ; un aluminosilicate ; et leurs mélanges, de préférence le liant minéral comprend au moins un carbonate, éventuellement en mélange avec un ou plusieurs des composés précités.

9. Procédé selon la revendication 8, **caractérisé en ce que** la matière solide contenant de l'amiante comprend ou est constituée de déchets amiantés choisis parmi: des flocages d'amiante ; des colles et enduits amiantés ; des plaques ou dalles de couverture de sol (notamment en carrelage ou faïence), de murs ou de toit (en particulier des tôles de fibrociment) ; du plâtre amianté ; des tuyauteries, notamment à base de fibrociment, en particulier des conduites d'aération ou des conduites d'adduction ou d'évacuation d'eau ; ou des éléments de mobilier à base de plaques d'amiante-ciment recouvertes d'émail.

10. Procédé selon l'une quelconque des revendications 1 à 3 et 5 à 9, **caractérisé en ce qu'**il comprend les étapes successives suivantes :
(a) la fragmentation de la matière solide pour former des fragments dont la plus grande dimension est comprise entre 1 et 20 cm,
(b) la mise en contact de la matière solide fragmentée avec une solution aqueuse d'acide, à une température comprise entre 5°C et moins de 50°C, dans un broyeur horizontal rotatif, de manière à obtenir une suspension,
(c) la séparation de la suspension issue de l'étape (b) en un filtrat et une matière solide traitée, suivie de la mise en suspension de la matière solide traitée dans un bain d'acide,
(d2) le chauffage de la suspension issue de l'étape (c) à une température comprise entre 80 et 110°C, de préférence entre 90 et 95°C, et
(e) le refroidissement de la suspension obtenue à l'étape (d2).

11. Procédé selon l'une quelconque des revendications 1 à 10, **caractérisé en ce que** l'acide est l'acide chlorhydrique.

12. Utilisation d'un broyeur horizontal rotatif pour décomposer, à l'aide d'une solution d'acide, une matière solide contenant : (a) de l'amiante et (b) un liant minéral.
